# EUROPÄISCHE PATENTANMELDUNG

(11) **EP 1 033 517 A2**
(43) Veröffentlichungstag der Anmeldung: **06.09.2000**
(21) Anmeldenummer: 00101833.2
(22) Anmeldetag: 29.01.2000
(51) Int. Cl.: F16L 17/04

(54) **Steckkupplung zum axialen Verbinden zweier Rohre**

(30) Priorität: 24.02.1999 DE 19907776
(71) Anmelder: Rasmussen GmbH, D-63477 Maintal (DE)
(72) Erfinder: Böhrer, Robert, 63486 Bruchkübel-Oberissigheim (DE); Hauke, Michael, 63607 Wächtersbach (DE); Rosenberger, Frank, 63825 Blankenbach (DE); Krauch, Karlheinz, 63546 Hammersbach (DE); Stichel, Willi, 63477 Maintal (DE)
(74) Vertreter: Knoblauch, Ulrich, Dr.

(57) **Zusammenfassung**

Eine bekannte Steckkupplung zum axialen Verbinden zweier Rohre enthält eine Dichtmuffe (2) in einem Schellenband (5) mit zwei Spannbacken (7, 8), die jeweils einen ersten Schenkel (11, 12) und einen zweiten Schenkel (13, 14) aufweisen. Die zweiten Schenkel (13, 14) sind durch eine Schraube zusammenziehbar. Um die Schraube und deren Betätigung zu vermeiden, ist erfindungsgemäß vorgesehen, daß die erste Spannbacke (7) in ihrem ersten Schenkel (11) ein Loch (15) mit einer Querkante (16) auf seiten ihres zweiten Schenkels (13) aufweist, daß radial nach außen gewölbte Stege (17) das Loch (15) in Umfangsrichtung begrenzen und der erste Schenkel (12) der zweiten Spannbacke (8) auf seiten der ersten Spannbacke (7) liegt und einen sich quer zum Schellenband (5) über eine nahezu der Länge jener Querkante (16) entsprechenden Länge erstreckenden ersten Vorsprung (18) aufweist, der zum zweiten Schenkel (14) der zweiten Spannbacke (8) hin geneigt ist und einen solchen Abstand von diesem zweiten Schenkel (14) hat, daß die Querkante (16) beim Spannen der Spannschelle (1) hinter dem ersten Vorsprung (18) einrastbar ist. Hierbei ist das Schellenband (5) mittels einer Spannzange spannbar.

## Beschreibung

Die Erfindung bezieht sich auf eine Steckkupplung zum axialen Verbinden zweier Rohre, die unprofilierte Endabschnitte aufweisen, mit einer elastomeren Dichtmuffe zur Aufnahme der Endabschnitte und mit einer die Dichtmuffe umgebenden Spannschelle mit einem Schellenband, das einen Spannkopf mit einer ersten und einer zweiten Spannbacke aufweist, die jeweils einen sich in Umfangsrichtung des Schellenbandes erstreckenden, an jeweils einem Endabschnitt des Schellenbandes angeschweißten ersten Schenkel und einen auf dem äußeren Schellenbandumfang hochstehenden zweiten Schenkel aufweisen, wobei die zweiten Schenkel durch ein separates Spannmittel zusammenziehbar sind.

Bei einer bekannten Steckkupplung dieser Art (DE 33 39 169 C2) umfaßt das Spannmittel eine die zweiten Schenkel der Spannbacken durchsetzende Spannschraube und einen Schraubendreher zum Festziehen und Lösen der Spannschraube.

Die Betätigung der Spannschraube ist in vielen Fällen zu zeitaufwendig und erfordert zur Einhaltung eines vorbestimmten Anzugsdrehmoments einen aufwendigen Schraubendreher mit einstellbarem Drehmoment. Andererseits ist die Spannschraube durch Unbefugte mittels eines einfachen Schraubendrehers leicht lösbar. So pflegen häufig Kinder die Spannschraube bei Abwasserrohre verbindenden Steckkupplungen dieser Art zu lösen, um sich einen Spaß daraus zu machen und/oder mutwillig Schäden zu verursachen.

Der Erfindung liegt die Aufgabe zugrunde, eine Steckkupplung der eingangs genannten Art anzugeben, deren Spannkopf sich einerseits rasch spannen läßt, andererseits aber durch Unbefugte nicht auf einfache Weise zu öffnen ist.

Erfindungsgemäß ist diese Aufgabe dadurch gelöst, daß die erste Spannbacke in ihrem ersten Schenkel ein Loch mit einer geraden Querkante auf seiten ihres zweiten Schenkels aufweist, daß radial nach außen gewölbte Stege das Loch in Umfangsrichtung begrenzen und daß der erste Schenkel der zweiten Spannbacke auf seiten der ersten Spannbacke liegt und einen sich quer zum Schellenband über eine nahezu der Länge jener Querkante entsprechenden Länge erstreckenden ersten Vorsprung aufweist, der zum zweiten Schenkel der zweiten Spannbacke hin geneigt ist und einen solchen Abstand von diesem zweiten Schenkel hat, daß die Querkante des Loches beim Spannen der Spannschelle in dem Zwischenraum zwischen dem ersten Vorsprung und dem zweiten Schenkel der zweiten Spannbacke hinter dem ersten Vorsprung einrastbar ist.

Bei dieser Lösung kann die Spannschelle durch Zusammenziehen der zweiten Schenkel der Spannbacken, nach dem Einführen der Rohre in die Steckkupplung, auf einfache Weise mittels einer Spannzange bis zum Einrasten der Querkante des Loches hinter dem ersten Vorsprung in den gespannten Zustand gebracht werden. Dabei legt sich der zwischen der Querkante des Loches und dem zweiten Schenkel der ersten Spannbacke liegende Abschnitt des ersten Schenkels der ersten Spannbacke, nachdem er über den radial äußeren Rand des ersten Vorsprungs hinweggeglitten ist, unter der Federkraft der Wölbung der beiden das Loch begrenzenden Stege am ersten Schenkel der zweiten Spannbacke und die Querkante des Loches fest an der Hinterschneidung des ersten Vorsprungs an. Um die Querkante des Loches zum Öffnen der Spannschelle wieder mit dem ersten Vorsprung außer Eingriff zu bringen, muß daher nicht nur eine hohe Spannkraft in Umfangsrichtung zum zweiten Schenkel der zweiten Spannbacke hin auf den zweiten Schenkel der ersten Spannbacke, sondern auch eine radiale Kraftkomponente auf den zweiten Schenkel der ersten Spannbacke ausgeübt werden. Dies erfordert eine spezielle Spannzange, die Unbefugten, insbesondere Kindern, normalerweise nicht zur Verfügung steht. Die Steckkupplung bietet daher eine größere Sicherheit gegen ein unbefugtes Öffnen. Darüber hinaus entfällt eine Spannschraube und gegebenenfalls eine zusätzliche Spannmutter. Das Spannen der Spannschelle kann daher auch auf einfachere Weise durch ein automatisches Werkzeug bewirkt werden.

Vorzugsweise ist dafür gesorgt, daß der erste Schenkel der zweiten Spannbacke einen zweiten Vorsprung aufweist, der dem ersten Vorsprung entspricht und einen um so viel größeren Abstand als dieser vom zweiten Schenkel der zweiten Spannbacke aufweist, daß die Querkante des Loches zwischen den Vorsprüngen hinter dem zweiten Vorsprung einrastbar ist, und daß sich das Loch mit einer der Länge der Querkante entsprechenden Breite in Umfangsrichtung des Schellenbandes über eine Länge erstreckt, die größer als der gegenseitige Abstand der Vorsprünge ist. Dieser zweite Vorsprung ermöglicht eine Voreinhängung des Loches hinter dem zweiten Haken in einem leicht vorgespannten Zustand der Spannschelle während des Transports zur Endmontagestelle und ein leichteres Einführen der Rohrenden in die Steckkupplung, bevor die Spannschelle endgültig gespannt wird.

Wenn die Vorsprünge aus etwa U-förmigen Einschnitten im Schellenband herausgebogene Laschen sind, lassen sie sich auf einfache Weise ausbilden.

Ferner kann dafür gesorgt sein, daß der erste Vorsprung auf seiner dem zweiten Schenkel der zweiten Spannbacke abgekehrten Seite wenigstens eine Sicke aufweist, deren First sich weitgehend geradlinig von dem radial äußeren Rand des ersten Vorsprungs bis zur Außenseite des ersten Schenkels der zweiten Spannbacke unter einem spitzen Winkel zu diesem ersten Schenkel erstreckt. Die Sicke oder Sicken bewirkt bzw. bewirken dann nicht nur eine Versteifung des ersten Vorsprungs, sondern wirkt bzw. wirken auch als Auflaufschräge, die das Hochgleiten der ersten Spannbacke über den ersten Vorsprung hinweg bis zum Einrasten der Querkante des Loches hinter dem ersten Vorsprung erleichtert.

Vorzugsweise ist der zweite Schenkel der ersten Spannbacke zu ihrem ersten Schenkel hin geneigt. Diese Neigung verhindert mit hoher Sicherheit, daß die Spannzange beim Spannen der Schelle von dem zweiten Schenkel der ersten Spannbacke abgleitet. Darüber hinaus erleichtert diese Neigung die Ausübung einer radialen Kraftkomponente auf diesen Schenkel beim Öffnen der Spannschelle.

Zusätzlich oder alternativ kann der radial äußere Endabschnitt des zweiten Schenkels der ersten Spannbacke zu ihrem ersten Schenkel hin abgewinkelt sein. Auch dadurch ist das Abgleiten der Spannzange vom zweiten Schenkel der ersten Spannbacke verhindert und die Ausübung einer radialen Kraftkomponente auf diesen zweiten Schenkel beim Lösen der Spannschelle erleichtert.

Aus den gleichen Gründen ist es auch vorteilhaft, wenn wenigstens der radial äußere Endabschnitt des zweiten Schenkels der zweiten Spannbacke von ihrem ersten Schenkel weg geneigt ist.

Darüber hinaus kann das Schellenband nach innen umgebogene seitliche Flansche zur Abstützung an den Rohren aufweisen. Die Abstützung der Flansche mit ihren radial inneren Kanten an den Rohren erschwert das Auseinanderziehen der Rohre, wenn sie unter einem Innendruck stehen. Wenn sie schräg radial nach innen abgebogen sind, ist eine gegenseitige Auswinklung der Rohre bis zu einem gewissen Grad möglich, ohne daß die Verbindung undicht wird.

Sodann kann eine Weiterbildung darin bestehen, daß die ersten Schenkel der Spannbacken auf die Flansche des Schellenbandes umgebogene Randabschnitte aufweisen, die an den Flanschen angeschweißt sind. Bei dieser Weiterbildung wird die auf die Spannbacken beim Spannen ausgeübte Spannkraft auch unmittelbar in die Flansche übertragen, so daß sie sich mit ihren radial inneren Kanten besonders fest am Umfang der Rohre anlegen.

Außerdem kann das Schellenband mit wenigstens einer radial innen umlaufenden Sicke in eine radial außen umlaufende Ringnut der Dichtmuffe eingreifen. Die Sicke oder Sicken erhöht beziehungsweise erhöhen zum einen die Biegsamkeit des Schellenbandes bei einer gegenseitigen Auswinklung der Rohre bzw. geringfügig unterschiedlichen Rohrdurchmessern, so daß die Flansche der Spannschelle und die Dichtmuffe weiterhin dicht am Umfang der Rohre anliegen bleiben.

Die Erfindung und ihre Weiterbildungen werden nachstehend anhand der beigefügten Zeichnungen eines bevorzugten Ausführungsbeispiels näher beschrieben. Es zeigen:
- Fig. 1: eine Axialansicht einer erfindungsgemäßen Steckkupplung im voreingehängten Zustand, teilweise im Schnitt,
- Fig. 2: eine Draufsicht auf die Steckkupplung nach Fig. 1 und auf deren Spannkopf,
- Fig. 3: einen Querschnitt durch Spannbacken der Spannachelle der Steckkupplung nach Fig. 1,
- Fig. 4: eine Axialansicht der Steckkupplung nach Fig. 1 im geschlossenen Zustand, teilweise im Schnitt, und
- Fig. 5: einen rechtwinkligen Axialschnitt durch einen Teil der Steckkupplung nach Fig. 1 und einen in die Steckkupplung eingeführten Endabschnitt eines der beiden durch die Steckkupplung zu verbindenden Rohre.

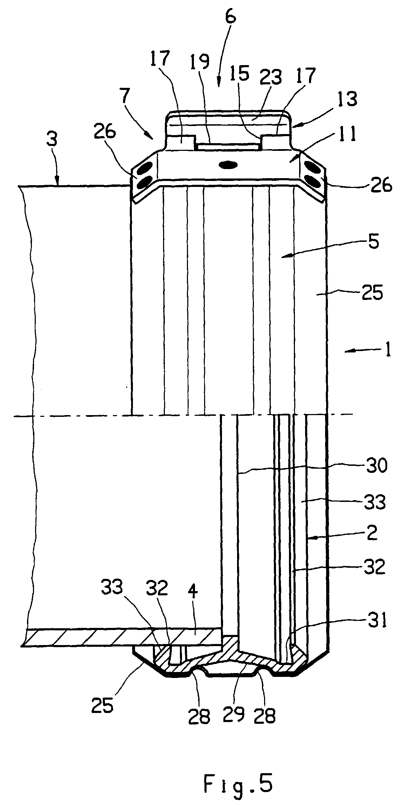

Die dargestellte Steckkupplung besteht aus einer Spannschelle 1 und einer in diese eingelegten elastomeren Dichtmuffe 2. Sie dient zum axialen Verbinden zweiter Rohre 3, von denen in Fig. 5 nur ein Rohr dargestellt ist. Bei den Rohren handelt es sich beispielsweise um Abwasserrohre, die unprofilierte Endabschnitte 4 aufweisen und mit diesen Endabschnitten 4 in der Steckkupplung aufgenommen werden.

Die Spannschelle 1 besteht aus einem Schellenband 5 mit einem Spannkopf 6, der eine erste Spannbacke 7 und eine zweite Spannbacke 8 aufweist. Die Spannbacken 7, 8 haben jeweils einen sich in Umfangsrichtung des Schellenbandes 5 erstreckenden, an jeweils einem Endabschnitt 9 bzw. 10 des Schellenbandes 5 durch (als schwarze Punkte dargestellte) Punktschweißungen, vorzugsweise Buckelschweißungen, angeschweißten ersten Schenkel 11, 12 und einen auf dem äußeren Schellenbandumfang hochstehenden zweiten Schenkel 13, 14. Die zweiten Schenkel 13, 14 sind durch ein nicht dargestelltes separates Spannmittel, hier eine spezielle Spannzange, zusammenziehbar, um die Spannschelle 1 zu spannen.

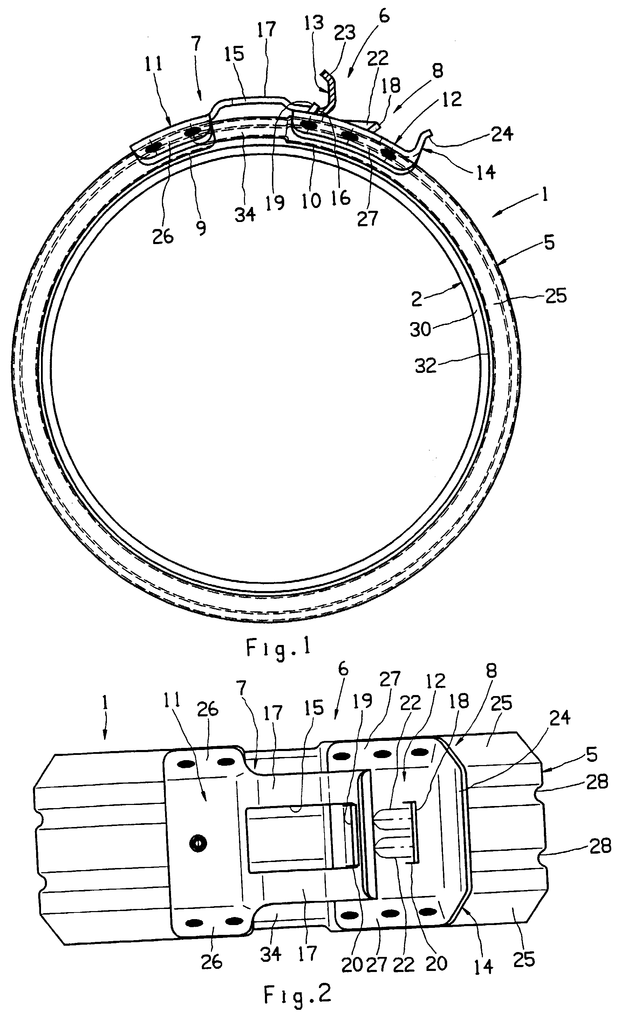

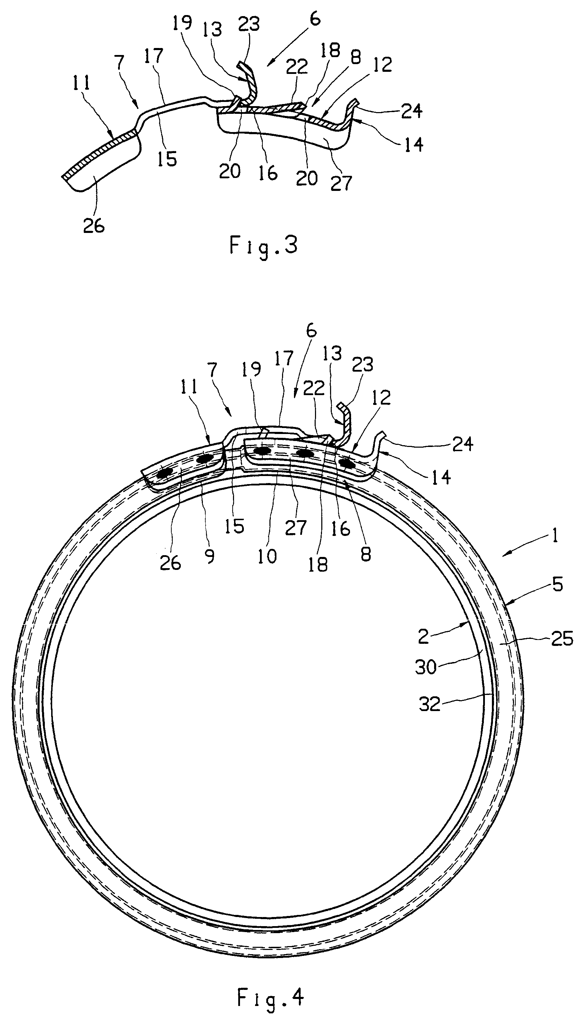

Die erste Spannbacke 7 hat in ihrem ersten Schenkel 11 ein Loch 15 mit einer geraden Querkante 16 (Fig. 1, 3, 5) auf seiten ihres zweiten Schenkels 13. Das Loch 15 ist in Umfangsrichtung des Schellenbandes 5 bzw. der Spannschelle 1 durch radial nach außen gewölbte Stege 17 beiderseits begrenzt. Der erste Schenkel 12 der zweiten Spannbacke 8 liegt auf seiten der ersten Spannbacke 7. Er hat einen sich quer zum ersten Schenkel 12 in einer nahezu der Länge der Querkante 16 entsprechenden Länge erstreckenden ersten Vorsprung 18, der zum zweiten Schenkel 14 der zweiten Spannbacke 8 hin geneigt ist. Der Vorsprung 18 hat einen solchen Abstand von dem zweiten Schenkel 14 der ersten Spannbacke 8, daß die Querkante 16 des Loches 15 beim Spannen der Spannschelle 1 in dem Zwischenraum zwischen dem ersten Vorsprung 18 und dem zweiten Schenkel 14 der zweiten Spannbacke 8 hinter dem ersten Vorsprung 18 einrastbar ist, wie es in Fig. 4 dargestellt ist.

Ferner hat der erste Schenkel 12 der zweiten Spannbacke 8 einen zweiten Vorsprung 19, der dem ersten Vorsprung 18 weitgehend entspricht. Der zweite Vorsprung 19 hat einen um soviel größeren Abstand als der erste Vorsprung 18 vom zweiten Schenkel 14 der zweiten Spannbacke 8, daß die Querkante 16 des Loches 15 zwischen den Vorsprüngen 18, 19 hinter dem zweiten Vorsprung 19 in einem voreingehängten Zustand einrastbar ist, wie es in den Fig. 1 bis 3 und 5 dargestellt ist. Das Loch 15 erstreckt sich mit einer der Länge der Querkante 16 entsprechenden Breite in Umfangsrichtung des Schellenbandes 5 über eine Länge, die größer als der gegenseitige Abstand der Vorsprünge 18, 19 ist.

Die Vorsprünge sind aus etwa U-förmigen Einschnitten 20 im Schellenband 5 herausgebogene Laschen (vgl. insbesondere Fig. 3). Der erste Vorsprung 18 hat auf seiner dem zweiten Schenkel 14 der zweiten Spannbacke 8 abgekehrten Seite wenigstens eine Sicke 22, hier zwei parallele Sicken 22, deren First sich weitgehend geradlinig von dem radial äußeren Rand des ersten Vorsprungs 18 bis zur Außenseite des ersten Schenkels 12 der zweiten Spannbacke 8 unter einem spitzen Winkel zu diesem ersten Schenkel 12 erstreckt.

Der zweite Schenkel 13 der ersten Spannbacke 7 ist zu ihrem ersten Schenkel 11 hin geneigt. Ferner ist der radial äußere Endabschnitt 23 des zweiten Schenkels 13 der ersten Spannbacke 7 zu ihrem ersten Schenkel 11 hin abgewinkelt.

Auch wenigstens der radial äußere Endabschnitt 24 des zweiten Schenkels 14 der zweiten Spannbacke 8 ist von ihrem ersten Schenkel 12 weg geneigt.

Das Schellenband 5 hat nach innen umgebogene seitliche Flansche 25 zur Abstützung an den Rohren 3 sowie zur Axialsicherung und Zentrierung der Dichtmuffe 2 in der Spannschelle 1.

Die ersten Schenkel 11, 12 der Spannbacken 7, 8 haben auf die Flansche 25 des Schellenbandes 5 umgebogene Randabschnitte 26, 27, die an den Flanschen 25 durch die erwähnte Punktschweißung angeschweißt sind.

Das Schellenband 5 greift mit wenigstens einer radial innen umlaufenden Sicke 28, hier zwei parallele Sicken 28, in eine radial außen umlaufende Ringnut 29 der Dichtmuffe 2 ein (Fig. 5).

Die Dichtmuffe 2 hat ferner auf ihrer Innenseite eine mittlere umlaufende Rippe 30 zur Anlage an den Stirnflächen der Rohre 3, auf beiden Seiten der mittleren Rippe 30 jeweils eine Ringnut 31 und an jedem Einführungsende eine axial äußere umlaufende Dichtlippe 32, deren axial äußere Flanke 33 einen vom Einführungsende zur mittleren Rippe 30 abnehmenden Durchmesser hat. Das Schellenband 5 übergreift die Stirnseiten der Dichtmuffe 2 mit ihren schräg nach innen zur Abstützung an den Rohren 3 abgewinkelten Flanschen 25. Der Innendurchmesser der Rippe 30 und der Dichtlippen 32 ist im ungespannten Zustand der Spannschelle 1 etwas kleiner als der Außendurchmesser der Rohre 3.

Ein unmittelbar am freien Ende des Endabschnitts 10 des Schellenbands 5 liegender Teil 34 ist gegenüber dem Hauptteil des Schellenbandes 5 abgekröpft und wird durch den Endabschnitt 9 beim Schließen der Spannschelle überlappt, so daß ein radialer Spalt der Spannschelle vermieden wird, in den das elastomere Material der Dichtmuffe 2 beim Spannen der Spannschelle 1 ohne die Überlappung eingeklemmt werden könnte.

Während des Transports der Steckkupplung oder vor dem endgültigen Spannen der Spannschelle 1 werden die Spannbacken 7, 8 mittels einer speziellen, die Schenkel 13, 14 hintergreifenden Spannzange aus einer vollständig geöffneten Lage so weit zusammengezogen, bis die Spannbacke 7 mit der geradlinigen Querkante 16 des Loches 15 über den Vorsprung 19 hinweggeglitten und hinter dem Vorsprung 19 in die in den Fig. 1 bis 3 und 5 dargestellte Lage eingerastet ist. In dieser Lage können dann die Rohre 3 bis zur Anlage an der Rippe 30 in die Steckkupplung eingeführt werden. Danach wird die Spannschelle 1 durch Zusammenziehen der Schenkel 13, 14 der Spannbacken 7, 8 mittels der Spannzange weitergespannt, bis die Spannbacke 7 mit der Querkante 16 des Loches 15 über die Sicken 22 und den Vorsprung 18 hinweg hinter diesem in die Lage nach Fig. 4 eingerastet ist. Das Einrasten wird durch die Federwirkung der Wölbung der Stege 17 unterstützt. Zusätzlich verhindert der freie Raum unter der Wölbung, daß sich der bis zum Schenkel 13 erstreckende Schenkel 11 beim Spannen durch die radial äußere Kante am freien Ende des Schenkels 12 radial nach außen gedrückt würde, wenn die Wölbung nicht vorhanden wäre, und demzufolge die Querkante 16 nicht den Vorsprung 18 hintergreifen würde. Vielmehr wird dieses freie Ende in dem Hohlraum unter der Wölbung aufgenommen, ohne mit dem Schenkel 11 im vollständig gespannten Zustand gemäß Fig. 4 in Berührung zu kommen. In dieser Lage sitzen die Endabschnitte 4 der Rohre 3 relativ fest in der Steckkupplung, da sich hierbei die radial inneren Kanten der Flansche 25 fest am Umfang der Rohre 3 anlegen und je nach der Festigkeit des Rohrmaterials auch in die Rohre 3 eingreifen können. Die Dichtlippen 32 legen sich zusätzlich fest am Umfang der Rohre 3 unter Verformung an. Die Steckkupplung ist daher auch bei geringfügiger Auswinklung der Rohre 3 relativ zueinander sowie bei nicht allzu hohen Innendrücken des durch die Rohre 3 geleiteten Fluids, insbesondere Abwasser, und/oder geringfügig voneinander abweichenden Außendurchmessern der Rohre 3 weitgehend dicht.

Um die Verbindung der Rohre 3 zu lösen und demzufolge die Spannschelle 1 zu öffnen, werden die Schenkel 13, 14 der beiden Spannbacken 11, 12 mittels der Spannzange in der Lage nach Fig. 4 hintergriffen und zunächst geringfügig in Umfangsrichtung zusammengezogen, bis die Querkante 16 des Loches 15 mit dem Vorsprung 18 außer Anlage gekommen ist, und dann der Schenkel 13 etwas radial nach außen gezogen, bis die Querkante 16 radial außerhalb des Vorsprungs 18 liegt, wonach dann der Schenkel 13 mittels der Spannzange, der Federkraft der Dichtmuffe 2 und des Schellenbandes 5 nachgebend, über den Vorsprung 18 entgegen dem Uhrzeigersinn in Fig. 4 hingeweggeführt werden kann, bis die Querkante 16 hinter dem Vorsprung 19 einrastet oder auch über diesen hinweggleitet.

Ein weiterer Vorteil der dargestellten Steckkupplung besteht darin, daß die zur Herstellung des Schellenbands 5 vorhandenen Werkzeuge ohne Änderungen weiterverwendet werden können, da das Schellenband 5 handelsüblich ist.

## Patentansprüche

1. Steckkupplung zum axialen Verbinden zweier Rohre (3), die unprofilierte Endabschnitte (4) aufweisen, mit einer elastomeren Dichtmuffe (2) zur Aufnahme der Endabschnitte und mit einer die Dichtmuffe (2) umgebenden Spannschelle (1) mit einem Schellenband (5), das einen Spannkopf (6) mit einer ersten und einer zweiten Spannbacke (7, 8) aufweist, die jeweils einen sich in Umfangsrichtung des Schellenbandes (5) erstreckenden, an jeweils einem Endabschnitt (9; 10) des Schellenbandes (5) angeschweißten ersten Schenkel (11; 12) und einen auf dem äußeren Schellenbandumfang hochstehenden zweiten Schenkel (13, 14) aufweisen, wobei die zweiten Schenkel (13, 14) durch ein separates Spannmittel zusammenziehbar sind, dadurch gekennzeichnet, daß die erste Spannbacke (7) in ihrem ersten Schenkel (11) ein Loch (15) mit einer geraden Querkante (16) auf seiten ihres zweiten Schenkels (13) aufweist, daß radial nach außen gewölbte Stege (17) das Loch (15) in Umfangsrichtung begrenzen und daß der erste Schenkel (12) der zweiten Spannbacke (8) auf seiten der ersten Spannbacke (7) liegt und einen sich quer zum Schellenband (5) über eine nahezu der Länge jener Querkante (16) entsprechenden Länge erstreckenden ersten Vorsprung (18) aufweist, der zum zweiten Schenkel (14) der zweiten Spannbacke (8) hin geneigt ist und einen solchen Abstand von diesem zweiten Schenkel (14) hat, daß die Querkante (16) des Loches (15) beim Spannen der Spannschelle (1) in dem Zwischenraum zwischen dem ersten Vorsprung (18) und dem zweiten Schenkel (14) der zweiten Spannbacke (8) hinter dem ersten Vorsprung (18) einrastbar ist.

2. Steckkupplung nach Anspruch 1, dadurch gekennzeichnet, daß der erste Schenkel (12) der zweiten Spannbacke (8) einen zweiten Vorsprung (19) aufweist, der dem ersten Vorsprung (18) entspricht und einen um so viel größeren Abstand als dieser vom zweiten Schenkel (14) der zweiten Spannbacke (8) aufweist, daß die Querkante (16) des Loches (15) zwischen den Vorsprüngen (18, 19) hinter dem zweiten Vorsprung (19) einrastbar ist, und daß sich das Loch (15) mit einer der Länge der Querkante (16) entsprechenden Breite in Umfangsrichtung des Schellenbandes (5) über eine Länge erstreckt, die größer als der gegenseitige Abstand der Vorsprünge (18, 19) ist.

3. Steckkupplung nach Anspruch 2, dadurch gekennzeichnet, daß die Vorsprünge (18, 19) aus etwa U-förmigen Einschnitten (20) im Schellenband (5) herausgebogene Laschen sind.

4. Steckkupplung nach einem der Ansprüche 1 bis 3, dadurch gekennzeichnet, daß der erste Vorsprung (18) auf seiner dem zweiten Schenkel (14) der zweiten Spannbacke (8) abgekehrten Seite wenigstens eine Sicke (22) aufweist, deren First sich weitgehend geradlinig von dem radial äußeren Rand des ersten Vorsprungs (18) bis zur Außenseite des ersten Schenkels (12) der zweiten Spannbacke (8) unter einem spitzen Winkel zu diesem ersten Schenkel (12) erstreckt.

5. Steckkupplung nach einem der Ansprüche 1 bis 4, dadurch gekennzeichnet, daß der zweite Schenkel (13) der ersten Spannbacke (7) zu ihrem ersten Schenkel (11) hin geneigt ist.

6. Steckkupplung nach einem der Ansprüche 1 bis 5, dadurch gekennzeichnet, daß der radial äußere Endabschnitt (23) des zweiten Schenkels (13) der ersten Spannbacke (7) zu ihrem ersten Schenkel (11) hin abgewinkelt ist.

7. Steckkupplung nach einem der Ansprüche 1 bis 6, dadurch gekennzeichnet, daß wenigstens der radial äußere Endabschnitt (24) des zweiten Schenkels (14) der zweiten Spannbacke (8) von ihrem ersten Schenkel (12) weg geneigt ist.

8. Steckkupplung nach einem der Ansprüche 1 bis 7, dadurch gekennzeichnet, daß das Schellenband (5) nach innen umgebogene seitliche Flansche ((25) zur Abstützung an den Rohren (3) aufweist.

9. Steckkupplung nach Anspruch 8, dadurch gekennzeichnet, daß die ersten Schenkel (11, 12) der Spannbacken (7, 8) auf die Flansche (25) des Schellenbandes (5) umgebogene Randabschnitte (26, 27) aufweisen, die an den Flanschen (25) angeschweißt sind.

10. Steckkupplung nach einem der Ansprüche 1 bis 9, dadurch gekennzeichnet, daß das Schellenband (5) mit wenigstens einer radial innen umlaufenden Sicke (28) in eine radial außen umlaufende Ringnut (29) der Dichtmuffe (2) eingreift.
